(19) **Europäisches Patentamt / European Patent Office / Office européen des brevets**

(11)　**EP 4 481 696 B1**

(12)　# EUROPEAN PATENT SPECIFICATION

(45) Date of publication and mention
of the grant of the patent:
**31.12.2025　Bulletin 2026/01**

(51) International Patent Classification (IPC):
**G06V 10/82** *(2022.01)*　　**G06V 20/40** *(2022.01)*
**G06V 20/52** *(2022.01)*　　**G06V 20/70** *(2022.01)*

(21) Application number: **23181135.7**

(22) Date of filing: **23.06.2023**

(52) Cooperative Patent Classification (CPC):
**G06V 10/82; G06V 20/49; G06V 20/52; G06V 20/70**

(54) **METHODS FOR ACTION SEGMENTATION OF A VIDEO SEQUENCE**

VERFAHREN ZUR AKTIONSSEGMENTIERUNG EINER VIDEOSEQUENZ

PROCÉDÉS DE SEGMENTATION D'ACTION D'UNE SÉQUENCE VIDÉO

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**25.12.2024　Bulletin 2024/52**

(73) Proprietors:
- **TOYOTA JIDOSHA KABUSHIKI KAISHA
  Toyota-shi, Aichi-ken, 471 8571 (JP)**
- **Rheinische Friedrich-Wilhelms-Universität Bonn
  53113 Bonn (DE)**

(72) Inventors:
- **FRANCESCA, Gianpiero
  1140 BRUSSELS (BE)**
- **GARATTONI, Lorenzo
  1140 BRUSSELS (BE)**
- **BAHRAMI, Emad
  53113 BONN (DE)**

- **GALL, Juergen
  53113 BONN (DE)**

(74) Representative: **Cabinet Beau de Loménie
103, rue de Grenelle
75340 Paris Cedex 07 (FR)**

(56) References cited:
- **DAZHAO DU ET AL: "Efficient U-Transformer
  with Boundary-Aware Loss for Action
  Segmentation", ARXIV.ORG, CORNELL
  UNIVERSITY LIBRARY, 201 OLIN LIBRARY
  CORNELL UNIVERSITY ITHACA, NY 14853, 26
  May 2022 (2022-05-26), XP091233228**
- **FANGQIU YI ET AL: "ASFormer: Transformer for
  Action Segmentation", ARXIV.ORG, CORNELL
  UNIVERSITY LIBRARY, 201 OLIN LIBRARY
  CORNELL UNIVERSITY ITHACA, NY 14853, 16
  October 2021 (2021-10-16), XP091077923**

# EP 4 481 696 B1

**Description**

BACKGROUND OF THE INVENTION

1. Field of the Invention

The invention relates to the field of action segmentation. In particular, the invention relates to computer-implemented methods for action segmentation of a video sequence.

2. Description of Related Art

Action segmentation consists in classifying segments of a video sequence into different action classes. Action segmentation systems can therefore be used in many applications such as, for example, monitoring production lines or studying the behavior of animals.

The topic of action segmentation has been studied extensively in the field of computer vision. Earlier methods addressed the problem by applying a sliding window to the video sequence (see [REF 1]), which typically has very limited receptive field and cannot capture long-term context of the actions, i.e. relations between remote frames in the video that are temporally separated by a given amount of time. Methods based on temporal convolutional networks demonstrated some capabilities in capturing long-range dependencies between frames of a video sequence (see [REF 2]), however their performance are far from optimal and can still be improved.

Recently, methods combining temporal convolutional networks with attention transformers have shown promising results for action segmentation, see [REF 17]. Attention transformers allow for drawing connections between any part of a video sequence and can thereby model the long-term context of a video sequence (see [REF 4]). However, computational requirements rapidly become prohibitive in the case of long videos as the whole sequence must be processed simultaneously by the attention transformer.

Further, Yi et al. [REF 5] proposed to compute attention only for a local temporal window via a plurality of layers, wherein the size of the local window increases by a factor two after each layer. However, in this method, the size of the local attention window cannot be increased more than a given value depending on the computational resource. Therefore, such method is generally not compatible with long videos.

The following references disclose various methods relating to action segmentation.

[REF 1] KARAMAN, Svebor, SEIDENARI, Lorenzo, et DEL BIMBO, Alberto. Fast saliency based pooling of fisher encoded dense trajectories. In : ECCV THUMOS Workshop. 2014. p. 5.

[REF 2] LEA, Colin, FLYNN, Michael D., VIDAL, Rene, et al. Temporal convolutional networks for action segmentation and detection. In : Proceedings of the IEEE Conference on Computer Vision and Pattern Recognition. 2017. p. 156-165.

[REF 3] FARHA, Yazan Abu et GALL, Jurgen. Ms-tcn: Multi-stage temporal convolutional network for action segmentation. In : Proceedings of the IEEE/CVF conference on computer vision and pattern recognition. 2019. p. 3575-3584.

[REF 4] VASWANI, Ashish, SHAZEER, Noam, PARMAR, Niki, et al. Attention is all you need. Advances in neural information processing systems, 2017, vol. 30.

[REF 5] YI, Fangqiu, WEN, Hongyu, et JIANG, Tingting. ASformer: Transformer for action segmentation. arXiv preprint arXiv:2110.08568, 2021.

[REF 6] STEIN, Sebastian et MCKENNA, Stephen J. Combining embedded accelerometers with computer vision for recognizing food preparation activities. In : Proceedings of the 2013 ACM international joint conference on Pervasive and ubiquitous computing. 2013. p. 729-738.

[REF 7] KUEHNE, Hilde, ARSLAN, Ali, et SERRE, Thomas. The language of actions: Recovering the syntax and semantics of goal-directed human activities. In : Proceedings of the IEEE conference on computer vision and pattern recognition. 2014. p. 780-787.

[REF 8] SENER, Fadime, CHATTERJEE, Dibyadip, SHELEPOV, Daniel, et al. Assembly101: A large-scale multi-view video dataset for understanding procedural activities. In : Proceedings of the IEEE/CVF Conference on Computer Vision and Pattern Recognition. 2022. p. 21096-21106.

[REF 9] RICHARD, Alexander et GALL, Juergen. Temporal action detection using a statistical language model. In : Proceedings of the IEEE conference on computer vision and pattern recognition. 2016. p. 3131-3140.

[REF 10] LEA, Colin, REITER, Austin, VIDAL, René, et al. Segmental spatiotemporal cnns for fine-grained action segmentation. In : Computer Vision-ECCV 2016: 14th European Conference, Amsterdam, The Netherlands, October 11-14, 2016, Proceedings, Part III 14. Springer International Publishing, 2016. p. 36-52.

[REF 11] LEA, Colin, FLYNN, Michael D., VIDAL, Rene, et al. Temporal convolutional networks for action segmentation and detection. In : proceedings of the IEEE Conference on Computer Vision and Pattern Recognition. 2017.

p. 156-165.

[REF 12] LEI, Peng et TODOROVIC, Sinisa. Temporal deformable residual networks for action segmentation in videos. In : Proceedings of the IEEE conference on computer vision and pattern recognition. 2018. p. 6742-6751.

[REF 13] GAMMULLE, Harshala, DENMAN, Simon, SRIDHARAN, Sridha, et al. Fine-grained action segmentation using the semi-supervised action GAN. Pattern Recognition, 2020, vol. 98, p. 107039.

[REF 14] LI, Muheng, CHEN, Lei, DUAN, Yueqi, et al. Bridge-prompt: Towards ordinal action understanding in instructional videos. In : Proceedings of the IEEE/CVF Conference on Computer Vision and Pattern Recognition. 2022. p. 19880-19889.

[REF 15] SINGHANIA, Dipika, RAHAMAN, Rahul, et YAO, Angela. Coarse to fine multi-resolution temporal convolutional network. arXiv preprint arXiv:2105.10859, 2021.

[REF 16] BEHRMANN, Nadine, GOLESTANEH, S. Alireza, KOLTER, Zico, et al. Unified fully and timestamp supervised temporal action segmentation via sequence to sequence translation. In : Computer Vision-ECCV 2022: 17th European Conference, Tel Aviv, Israel, October 23-27, 2022, Proceedings, Part XXXV. Cham : Springer Nature Switzerland, 2022. p. 52-68.

[REF 17] FORNEY, G. David. The viterbi algorithm. Proceedings of the IEEE, 1973, vol. 61, no 3, p. 268-278.

[REF 18] SOURI, Yaser, FARHA, Yazan Abu, DESPINOY, Fabien, et al. Fifa: Fast inference approximation for action segmentation. In : Pattern Recognition: 43rd DAGM German Conference, DAGM GCPR 2021, Bonn, Germany, September 28-October 1, 2021, Proceedings. Cham : Springer International Publishing, 2022. p. 282-296.

[REF 19] LIU, Zhichao, WANG, Leshan, ZHOU, Desen, et al. Temporal Segment Transformer for Action Segmentation. arXiv preprint arXiv:2302.13074, 2023.

[REF 20] ISHIKAWA, Yuchi, KASAI, Seito, AOKI, Yoshimitsu, et al. Alleviating Over-segmentation Errors by Detecting Action Boundaries. In : 2021 IEEE Winter Conference on Applications of Computer Vision (WACV). IEEE, 2021. p. 2321-2330.

[REF 21] XU, Ziwei, RAWAT, Yogesh, WONG, Yongkang, et al. Don't Pour Cereal into Coffee: Differentiable Temporal Logic for Temporal Action Segmentation. Advances in Neural Information Processing Syaithorsstems, 2022, vol. 35, p. 14890-14903.

[REF 22] LI, Shi-Jie, ABUFARHA, Yazan, LIU, Yun, et al. MS-TCN++: Multi-Stage Temporal Convolutional Network for Action Segmentation. IEEE Transactions on Pattern Analysis and Machine Intelligence, 2020.

[REF 23] WANG, Dong, HU, Di, LI, Xingjian, et al. Temporal relational modeling with self-supervision for action segmentation. In : Proceedings of the AAAI Conference on Artificial Intelligence. 2021. p. 2729-2737.

[REF 24] SOURI, Yaser, FAYYAZ, Mohsen, MINCIULLO, Luca, et al. Fast weakly supervised action segmentation using mutual consistency. IEEE Transactions on Pattern Analysis and Machine Intelligence, 2021, vol. 44, no 10, p. 6196-6208.

[REF 25] GAO, Shang-Hua, HAN, Qi, LI, Zhong-Yu, et al. Global2local: Efficient structure search for video action segmentation. In : Proceedings of the IEEE/CVF Conference on Computer Vision and Pattern Recognition. 2021. p. 16805-16814.

[REF 26] WANG, Zhenzhi, GAO, Ziteng, WANG, Limin, et al. Boundary-aware cascade networks for temporal action segmentation. In : Computer Vision-ECCV 2020: 16th European Conference, Glasgow, UK, August 23-28, 2020, Proceedings, Part XXV 16. Springer International Publishing, 2020. p. 34-51.

[REF 27] CHEN, Min-Hung, LI, Baopu, BAO, Yingze, et al. Action Segmentation With Joint Self-Supervised Temporal Domain Adaptation. In : 2020 IEEE/CVF Conference on Computer Vision and Pattern Recognition (CVPR). IEEE, 2020. p. 9451-9460.

[REF 28] PARK, Junyong, KIM, Daekyum, HUH, Sejoon, et al. Maximization and restoration: Action segmentation through dilation passing and temporal reconstruction. Pattern Recognition, 2022, vol. 129, p. 108764.

[REF 29] TIAN, Xiaoyan, JIN, Ye, et TANG, Xianglong. Local-Global Transformer Neural Network for temporal action segmentation. Multimedia Systems, 2023, vol. 29, no 2, p. 615-626.

[REF 30] AZIERE, Nicolas et TODOROVIC, Sinisa. Multistage temporal convolution transformer for action segmentation. Image and Vision Computing, 2022, vol. 128, p. 104567.

[REF 31] CARREIRA, Joao et ZISSERMAN, Andrew. Quo vadis, action recognition? a new model and the kinetics dataset. In : proceedings of the IEEE Conference on Computer Vision and Pattern Recognition. 2017. p. 6299-6308.

[REF 32] LIN, Ji, GAN, Chuang, et HAN, Song. Tsm: Temporal shift module for efficient video understanding. In : Proceedings of the IEEE/CVF international conference on computer vision. 2019. p. 7083-7093.

[REF 33] ULYANOV, Dmitry, VEDALDI, Andrea, et LEMPITSKY, Victor. Instance normalization: The missing ingredient for fast stylization. arXiv preprint arXiv:1607.08022, 2016.

[REF 34] DU, Dazhao, SU, Bing, LI, Yu, et al. Efficient u-transformer with boundary-aware loss for action segmentation. arXiv preprint arXiv:2205.13425, 2022.

SUMMARY OF THE INVENTION

According to aspects of the present disclosure, a computer-implemented method for action segmentation of a video sequence is disclosed. The method comprises:

- selecting a plurality of local segments from the video sequence, each local segment comprising a plurality of successive frames of the video sequence;
- processing local segments with first attention transformers in order to generate first enhanced feature maps modelling relations between local segments, wherein the first attention transformers are models configured to implement scaled-dot product attention on the local segments, outputs of the first attention transformers being concatenated in order to obtain the first enhanced feature maps;
- selecting a plurality of global segments from the first enhanced feature maps, each global segment comprising a plurality of non-successive frames of the first enhanced feature maps;
- processing global segments with second attention transformers in order to generate second enhanced feature maps modelling relations between global segments, wherein the second attention transformers are models configured to implement scaled-dot product on the global segments, outputs of the second attention transformers being concatenated in order to obtain the second enhanced feature maps; and
- assigning an action class to each frame of the video sequence based on the second enhanced feature maps, wherein the second enhanced feature maps are processed through a linear layer and used for prediction of the action classes of frames of the video sequence.

In the present description, the sequences of frames of the (input) video sequence may be a sequence of features maps (frame-wise feature maps) obtained from the video sequence. For example, such frame-wise features map may be obtained from the video sequence with a convolutional neural network (see for example [REF 31] & [REF 32]).

In the present description, the first enhanced feature maps form a sequence of frame-wise feature maps calculated for each frame of the video sequence using attention transformers. Further, the second enhanced feature maps form a sequence of frame-wise feature maps calculated for each frame of the first enhanced maps using attention transformers.

In the present description, an attention transformer is a transformer-based machine learning model implementing an attention mechanism. Such attention mechanism may constitute, for example, a scaled dot-product attention (see [REF 4]). The scaled dot-product attention may be, for example, a scaled dot-product self-attention or a scaled dot-product cross-attention. The first transformers and the second transformers may be trained on a training dataset before the method is used for performing action segmentation on a video sequence.

In the present method, attention is sequentially calculated on local segments of the video sequence (local attention calculation via the first transformers) and on global segments of the video sequence (global attention calculation via the second transformers) so that the global context (also referred to as long-term context) of the video sequence can be captured while releasing constraint on the computational requirements. In particular, such method allows for capturing the global context of a video sequence while maintaining a reasonable span for the global attention. Further, the global attention span can be adjusted via the size of the global segments in order to make the most out of the available computational resource budget. Therefore the present method is more advantageous that the methods of [REF 5] wherein computational resources are spent less efficiently.

The local attention calculation is focused on the relations (similarity and differences) between successive (neighboring) frames of the video sequence while the global attention calculation focuses on relations between non-successive, possibly remote, frames of the video sequence that embed the long-term context of the video sequence. The inventors have observed that the synergistic combination of local attention with global attention enhances the performance of the action segmentation task.

Further, the present method can be implemented with models that comprise a smaller number of parameters than in methods of the prior art while achieving better performance (for example in terms of standard metrics such as accuracy and F1 score). In addition, compared to transformer-based methods of the prior art, such as the methods disclosed in [REF 5] and [REF 16], the training time is significantly reduced and longer video sequence can be segmented without reaching computational limits of current hardware.

According to embodiments, the step of processing local segments comprises calculating local scaled dot-product self-attention weights for each local segment, wherein said weights are used to generate the first enhanced feature maps.

According to embodiments, the step of processing global segments comprises calculating global scaled dot-product cross-attention weights for each global segment, wherein said weights are used to generate the second enhanced feature maps.

According to embodiments, the plurality of local segments comprise all the frames of the video sequence, and the plurality of global segments comprise all the frames of the first enhanced feature maps.

According to embodiments, the step of selecting a plurality of global segments comprises selecting the global segments by systematic sampling of the first enhanced feature maps, with a given sampling interval. In particular, in order to form a global segment, some frames of the first enhanced feature maps are selected while other frames of the first enhanced feature maps are not selected, the sampling interval being the distance between the selected frames.

According to embodiments, the systematic sampling has a sampling interval of about 64 frames.

According to embodiments, the first enhanced feature maps are obtained by concatenation of first enhanced segments output by the first transformers (after processing the local segments).

According to embodiments, the second enhanced feature maps are obtained by concatenation of second enhanced segments output by the second transformers (after processing the global segments).

According to embodiments, the selected plurality of successive local segments are overlapping segments, wherein two successive overlapping segments comprise at least one frame in common.

According to embodiments, the method further comprises using a residual connection to take into account, at least partially, the frames of the (input) video sequence in the generation of the second enhanced feature maps.

According to embodiments, the method further comprises reducing a dimensionality of each frame of the video sequence before selecting the local segments from the video sequence.

According to embodiments, the steps of the method are sequentially applied to the video sequence a plurality of times.

According to embodiments, dimensionality of the frames of the video sequence is reduced between two sequential implementations of the method to the video sequence.

According to embodiments, the first transformers and the second transformers are trained using a multi-stage loss.

The present disclosure is further related to a computer program set including instructions for executing the steps of the above described method when said program set is executed by a computer. This program set can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram illustrating steps of a method for action segmentation according to the present disclosure;
FIG. 2 is a block diagram illustrating aspects of a method according to the present disclosure, according to embodiments;
FIG. 3 is a block diagram illustrating architecture of embodiments of the method according to the present disclosure;
FIGS. 4-5 are tables illustrating advantages of the method according to the present disclosure over other methods;
FIG. 6 is an ablation study illustrating relative performance of embodiments of the present method with different architectures;
FIG. 7 is a table illustrating impact of the overlapping between successive local segments in the method according to the present disclosure; and
FIG. 8 is a table illustrating impact of the ordering of the global attention calculation and the local attention calculation in the method according to the present disclosure.

DETAILED DESCRIPTION OF EMBODIMENTS

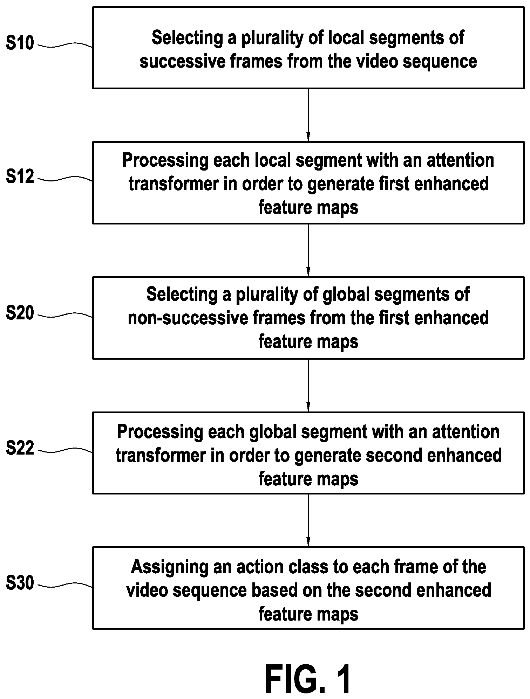

Computer-implemented methods for (temporal) action segmentation of a video sequence, which constitute exemplary embodiments of the present disclosure, are now going to be presented in relation with FIGS.1-8.

In reference to FIG. 1, steps of a method according to the present description are disclosed. In embodiments, the method comprises the following steps: S10: Selecting a plurality of local segments of successive frames from the video sequence; S12: Processing each local segment with an attention transformer in order to generate first enhanced feature maps; S20: Selecting a plurality of global segments of non-successive frames from the first enhanced feature maps; S22: Processing each global segment with an attention transformer in order to generate second enhanced feature maps; S30: Assigning an action class to each frame of the video sequence based on the second enhanced feature maps.

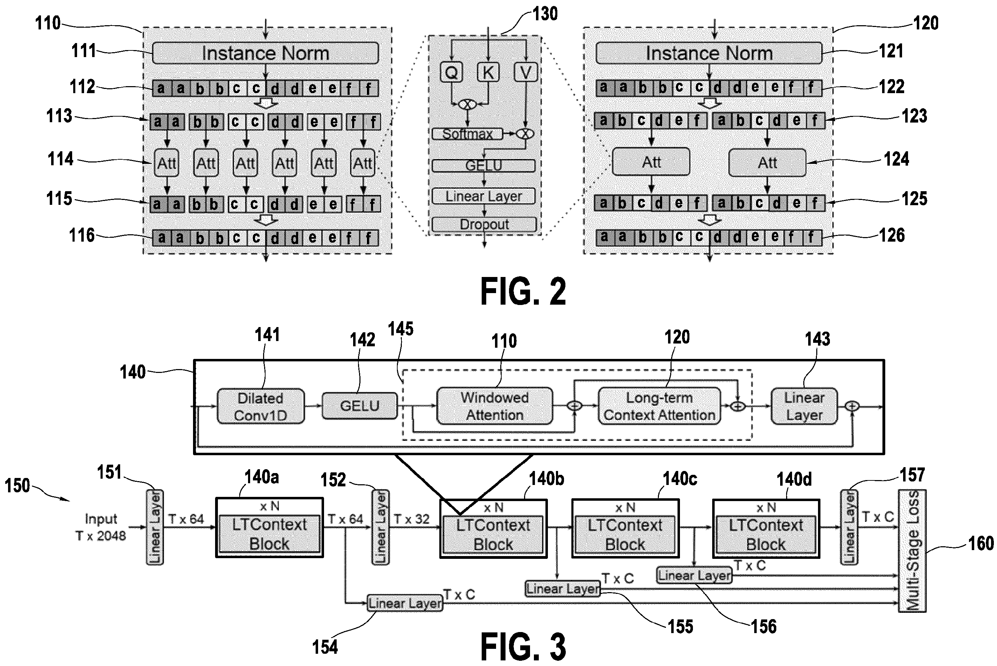

In reference to FIG. 2, architecture of a local attention module 110 and a global attention module 120 according to embodiments of the present disclosure are disclosed.

The local attention module 110 (also referred to as windowed attention module in the present disclosure) is a neural network-based module configured to take as an input a sequence of frame-wise features maps, also referred to as input frames, and generate as an output a sequence of enhanced frame-wise feature maps 116, wherein the input frames have been processed with attention transformers 114 so as to take into account similarity between features of neighboring frames (i.e. local attention). In particular, the local attention module 110 implements step S10 and step S12 of the present method.

The frame-wise features maps (input frames) may be extracted from frames of a video sequence using convolutional neural networks (see for example [REF 31] & [REF 32]).

The input frames may be normalized through an instance normalization layer 111 in order to improve the stability of the training, see [REF 33]. At the output of the normalization layer 111, the (normalized) sequence of frames 112 is partitioned into a plurality of local segments 113.

The local segments 113 are segments composed of successive frames of the normalized sequence of frames 112. In reference to FIG. 2, frames belonging to the same local segment are identified by a lowercase letter (a, b, c, d, e, f) to make up for the lack of distinction between the gray levels of the drawing. Accordingly, in the embodiments illustrated in FIG. 2, the local segments are non-overlapping segments, meaning that two local segments do not share any frame in common. In other embodiments (not illustrated), the local segments may be overlapping segments, meaning that two different local segments (for example two successive local segments) may comprise one or more frames in common.

The local segments 113 are processed through a plurality of attention transformers 114 to yield a plurality of enhanced local segments 115. In embodiments, each local segment of the local segments 113 is processed through an attention transformer whose structure is outlined in the dotted box 130. Such structure of the used attention transformers, designed to implement a scaled dot-product attention, is known in the art, see for example [REF 5].

The attention transformer transforms the input (local segment) into a query, a key and a value; and computes the output (enhanced feature maps) as a weighted sum of the values.

In a general case of a sequence of input frames, $X \in \mathbb{R}^{T \times D}$, wherein T is the length of the sequence and D is the dimensionality of the elements of the sequence (the frames), the computed attention weights may be written as follows (see [REF 4]):

$$Attention(Q, K, V) = \text{softmax}_{row}\left(\frac{QK^T}{\sqrt{D}}\right)V \qquad \text{(Equation 1)}$$

In Equation 1, (Q, K, V) refer to the Queries, Keys, and Values, respectively, which are obtained by linear transformation of the input frames, X.

In the case of the local attention module 110, the local attention is not computed on the whole sequence of (normalized) input frames 112 but is computed on local segments 113, $Y \in \mathbb{R}^{W \times D}$, wherein W is the size of the local segment (local window size), and D is the dimensionality of the frames comprised in the local segment. Therefore, attention is computed T/W times, i.e. once for each local segment.

In embodiments, self-attention is used, therefore the queries, Q, may directly be the local segments or copies of the local segments. Further, the keys, K, and the values, V, may be obtained from the local segments using an overlap between successive local segments. In particular, the dimensions of Q, K, and V may be such that: $Q \in \mathbb{R}^{W \times D}$, $K \in \mathbb{R}^{2W \times D}$, $V \in \mathbb{R}^{2W \times D}$, wherein K and V are selected by overlapping two successive segments.

In embodiments, a masking is performed when K and V exceed the input sequence. In particular, when the sequence of input frames cannot be divided exactly by 2W, such sequence may be divided using a Euclidean division and a zero padding is used in order to mask out the remainder of the sequence.

The enhanced local segments 115 are then concatenated in order to obtain a sequence of frame wise enhanced feature maps 116.

In the embodiments illustrated in FIG. 2, for the sake of simplicity of the representation, the input sequence of frames is partitioned into non-overlapping local segments of window size, W, equal to 2. However, most of the embodiments used in the experiments relate to a local window size equal to 64, which has been found by the inventors as a particularly advantageous value in terms of achieved performance of the present method. Other advantageous values of the local window size have been found to be 8, 16, and 32.

The global attention module 120 (also referred to as long-term context attention module in the present disclosure) is a neural network-based module configured to take as an input a sequence of frame-wise feature maps, also referred to as input frames, and generate as an output a sequence of enhanced frame-wise feature maps 126, also referred to as enhanced feature maps, wherein the frames have been processed with attention transformers so as to take into account similarity between features of remote frames (i.e. long-term context attention). In particular, the global attention module 120 implements step S20 and step S22 of the present method.

The input frames may be normalized through an instance normalization layer 121. At the output of the normalization layer 121, the (normalized) sequence of frames 122 is partitioned into a plurality of global segments 123.

The global segments 123 are segments composed of non-successive (remote) frames of the normalized sequence of frames 122. In reference to FIG. 2, the frames are identified with the same lowercase letters (a, b, c, d, e, f) as in the local attention module 110, in order to emphasize the differences in the processing of the sequence of frames between the local attention module 110 and the global attention module 120.

As shown in FIG. 2, the global segments 123 are non-overlapping segments, meaning that two global segments do not share any frame in common.

In the embodiments illustrated in FIG. 2, for illustrative purposes, the global segments 123 have a size, Wg, equal to 6 (they comprise six frames).

In embodiments, the global segments 123 are formed by systematic sampling of an input sequence of frames with a sampling interval, G. For example, in the illustrated example, G=2, so that every other frame starting from the first frame is selected to form the first global segment, and every other frame starting from the second frame is selected to form the second global segment.

The size of the global segments, Wg, directly depends on the sampling interval, G, used to select the frames from the input sequence of size, T, through the following expression: Wg=T/G.

Advantageously, the partition of the frames into the global segments 123 is independent of the partition of the frames into local segments 113. In particular, the size of the global segment, Wg, is independent of the local window size, W.

In practice, most of the embodiments used in the experiments have a size of the global segments, Wg, equal to 64, which has been found by the inventors as a particularly advantageous value in terms of achieved performance of the present method. Other advantageous values of the size of the global segments have been found to be 8, 16, and 32.

The global segments 123 are processed through a plurality of attention transformers 124 to yield a plurality of enhanced global segments 125. In embodiments, each global segment of the global segments 123 is processed through an attention transformer to compute global attention. In embodiments, the attention transformer used in the global attention module has the same structure as the attention transformer used in the local attention module, i.e, the structure outlined in the dotted box 130.

The attention transformer transforms the input (global segment) into a query, a key and a value; and computes the output as a weighted sum of the values.

In the case of the global attention module 120, the global attention is not computed on the whole sequence of (normalized) input frames 122 but is computed on global segments 123, $Z \in \mathbb{R}^{(T/W_g) \times D}$, wherein Wg is the size of a global segment, T is the size of the input sequence, and D is the dimensionality of the frames comprised in a global segment.

Therefore, attention is computed T/Wg=G times, i.e. once for each global segment. The parameter G or, equivalently, the parameter Wg, can be changed and provides flexibility to adjust the sparseness of the partition of the input sequence in order, for example, to respect an available memory budget.

In particular, the parameter G can be adjusted by selecting the sampling rate used to form the global segments 123. As an example, G=1 (i.e. no sampling) corresponds to a case where global attention is computed over the whole input sequence, which corresponds to a dense (non-sparse) attention calculation. Further, when G is strictly superior to 1, some sparsity is induced in the attention calculation.

In embodiments, G=64 is selected. Further, in the experiments, the length of the input sequence depends on the dataset and may be comprised, for example, between about 130 frames and about 55000 frames.

The enhanced global segments 125 are then reordered and concatenated in order to obtain the enhanced feature maps 126. Such feature maps are processed through a linear layer and used for prediction of the action classes of the input sequence of frames. Finally, action segmentation of the video sequence from which the input frames have been extracted can be obtained.

FIG.3 illustrates a neural network-based architecture 150 of embodiments of the present method comprising a local attention module 110 and a global attention module 120 as previously described.

The architecture 150 shows the different modules through which are processed a sequence of frames from a video when using embodiments of the method according to the present disclosure.

In embodiments, an input sequence of frames is processed through a plurality of linear layers (151, 152, 153) and a plurality of long-term context (LTC) blocks 140 to generate an output feature maps. The output feature map is processed through a softmax layer (not illustrated) to generate frame-wise action class probabilities. The frame-wise action probabilities are processed through an argmax layer (not illustrated) in order to obtain the classified input sequence wherein each frame has been assigned with an action class.

LTC blocks 140 may have a structure depicted in the top part of FIG. 3. In particular, similarly to the structure disclosed in [REF 5], an LTC block 140 may comprise a one-dimensional dilated temporal convolution layer 141 whose output is fed to a Gaussian Error Linear Unit (GELU) 142. The sequence of features output by the GELU 142 is input into a combination of a local attention module 110 followed by a global attention module 120 according to the present disclosure. The output of the global attention module 120 is fed to a linear layer 143 with a residual connection to output features for each frame.

In embodiments, as illustrated in FIG. 3, the LTC blocks 140 are repeated N times in a cascaded architecture in order to form LTC modules (140a, 140b 140c, 140d) wherein a dilation factor is increased by a factor 2 after each LTC block 140, see details on this cascaded architecture in [REF 3] & [REF 5].

FIG. 3 shows that there are residual connections after the local attention module 110 and after the global attention module 120 so that the input frames (feature maps) of a module are passed on to the next module. Such residual connections have proven particularly useful for improving performance of action segmentation, see [REF 4]. The ensemble of the local attention module 110 and the global attention module 120 forms a decomposed Global-Local attention module 145 that is particularly advantageous for action segmentation, in particular when combined with the architecture illustrated in FIG. 3.

In the illustrated embodiments, the input sequence of frame comprises T frames, each frame consisting of 2048 elements. The input sequence is input in a linear layer 151 in order to reduce the dimensionality of each frame down to 64 elements. The dimensionality-reduced sequence is processed through a first LTC module 140a comprising N=9 LTC blocks in order to generate a feature map $F \in \mathbb{R}^{T \times D}$. The output of the first LTC module 140a is fed to a linear layer 152 in order to reduce the dimensionality of the feature map down to 32, and is then input in a series of three LTC modules 140b, 140c, 140d.

The dilation factor is reset to one at the input of each LTC module 140a, 140b, 140c, 140d, meaning that the dilation factor of the first LTC block of each LTC module is set to one.

In embodiments, cross-attention is used in the three last LTC modules (140b, 140c, 140d) instead of self-attention. This means that, when computing local and global attention, the frame-wise probabilities, $P \in \mathbb{R}^{T \times C}$, that are input in these modules are used as queries and keys instead of the feature maps, $F \in \mathbb{R}^{T \times D}$. In such case, in the local attention module 110, the dimensions of the queries, keys and values are such that:

$$Q \in \mathbb{R}^{W \times C}, \; K \in \mathbb{R}^{2W \times C}, \; V \in \mathbb{R}^{2W \times D}$$

. Further, in the global attention module 120, the dimensions of the queries, keys and values may be such that: $Q \in \mathbb{R}^{G \times C}$, $K \in \mathbb{R}^{G \times C}$, $V \in \mathbb{R}^{G \times D}$. Although not illustrated, such embodiments imply that the probabilities P are an additional input to the local attention module 110 and to the global attention module 120 of the three last LTC modules 140b, 140c, 140d.

During training of the neural network-based architecture 150, intermediate feature maps taken at the output of the first LTC module 140a, the second LTC module 140b, the third LTC module 140c, and the fourth LTC module 140d are respectively processes through fours linear layers 154, 155, 156, 157 in order to calculate the frame-wise class probabilities, $P \in \mathbb{R}^{T \times C}$, wherein C is the number of action classes. Such probabilities are then fed to a multi-stage loss module 160 in order to generate a multi-stage loss that is optimized during training. In embodiments, cross-entropy combined with the mean square error smoothing loss is used for a fair comparison with known methods, see [REF 5].

During inference, the frame-wise class probabilities, $P \in \mathbb{R}^{T \times C}$, obtained at the output of the last LTC module 140d is generally fed to a linear layer, a softmax layer, and an argmax layer in order to obtain the classified input sequence wherein each frame has been assigned with an action class.

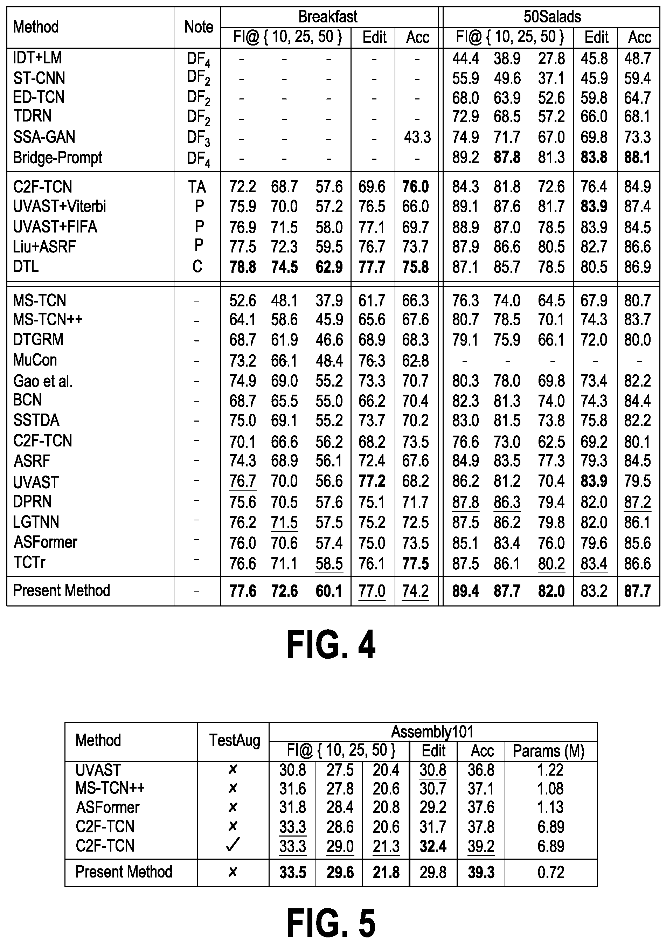

FIGS. 4-5 show results of embodiments of the present action segmentation method when applied to action segmentation of video sequence from known action segmentation datasets and comparison with known methods.

The used action segmentation datasets are: the 50Salads dataset [REF 6], the Breakfast dataset [REF 7]; and the Assembly101 dataset [REF 8].

The 50Salads dataset contains 50 video sequences annotated with 17 action classes. On average, each video is 6.4 minutes long and has 18 action segments.

The Breakfast dataset contains 1,712 video sequences annotated with 48 action classes. On average, each video is 2.3 minutes and has 6.6 action segments.

The Assembly101 dataset contains 4,321 video sequences annotated with 202 action classes composed of 11 verbs and 61 objects. Assembly101 is a procedural activity dataset containing videos of people assembling and disassembling 101 toy vehicles. On average, each video includes 24 action segments and is 7.1 minutes long. The Assembly101 dataset is more challenging than the Breakfast dataset and the 50Salads dataset. In particular, compared to the Breakfast dataset, the Assembly101 dataset has 2.5 times more videos, 6.7 times more action segments, and 4.2 more action classes.

In FIGS. 4-5, the known methods to which the present method is compared are: IDT+LM (see [REF 9]), ST-CNN (see [REF 10]), ED-TCN (see [REF 11]), TDRN (see [REF 12]), SSA-GAN (see [REF 13]), Bridge-Prompt (see [REF 14]), C2F-TCN (see [REF 15]), UVAST+Viterbi (see [REF 16] & [REF 17]), UVAST+FIFA (see [REF 16] & [REF 18]), Liu+ASRF (see [REF 19] & [REF 20]), DTL (see [REF 21]), MS-TCN (see [REF 3]), MS-TCN++ (see [REF 22]), DTGRM (see [REF 23]), MuCon (see [REF 24]), Gao et al. (see [REF 25]), BCN (see [REF 26]), SSTDA (see [REF 27]), ASRF (see [REF 20]), UVAST (see [REF 16]), DPRN (see [REF 28]), LGTNN (see [REF 29]), ASFormer (see [REF 5]), TCTr (see [REF 30]).

For fair comparison of the present method with the known methods, the frame-wise feature maps used as input of the method are the 2048 dimensional feature vectors provided with the training datasets, which have been used in the cited works. In particular the I3D features [REF 31] are used for the 50Salads dataset, and the TSM features [REF 32] are used for the Assembly101 dataset. Further, in order to compensate a difference between the video frame rate of the 50Salads dataset compared to the video frame rate of the Breakfast dataset and of the Assembly101 dataset, temporally down-sampled feature maps are used for the 50Salads dataset, following a previous study [REF 3].

FIG. 4 shows results of the present action segmentation method and known methods when such methods are trained and tested on the Breakfast dataset (column 3 to 7) and the 50Salads dataset (column 8 to 12). In order to obtain the results related to the Breakfast dataset and the 50Salads dataset, four-fold and five-fold cross-validation are respectively used, the average of such cross-validations are reported, similarly to other studies (see [REF 3]).

In FIG. 4, performances of the methods are evaluated using the following standard metrics: segmental F1 score at the overlapping thresholds of 10%, 25%, and 50% (F1@{10, 25, 50}); segmental Edit distance (Edit), and frame-wise accuracy (Acc). For such metrics, it is considered that the higher is the better, meaning that the performance of the methods under study is considered higher when the value of the metrics is higher. For each data, the best result in each part of the table is represented in bold, for the lower part of the tables, the second to best result is underlined.

In FIG. 4, the first column (Note) contains reference to additional notes specifying that a particular setting is used for a particular method. Such additional notes are: additional post-processing (P); additional constraints (C); different features (DF), and test augmentation (TA). The different features comprise in particular, DF1: Improved Dense Trajectories (IDT); DF2: Spatio-temporal Visual Geometry Group-style Convolutional neural network; DF3: Generative Adversarial Network (GAN); DF4: ActionCLIP; and TA: test augmentation.

FIG.4 shows that the present method outperforms all the known methods to which it is compared in terms of segmental F1 score, which is the most important metrics in the context of action segmentation. Further, the present method achieves a better segmental Edit distance than almost all methods, the only exceptions being UVAST and TCTr. However, UVAST uses an additional alignment decoder that can explain the better performance in terms of segmental Edit score over the present method. Further, the use of an additional alignment decoder significantly undermines the frame-wise accuracy (see row 7). TCTr only achieves better frame-wise accuracy than the present method on the Breakfast dataset and better higher segmental Edit score on the 50Salads dataset. TCTr performs worse than the present method in terms of all the other metrics. Further, TCTr utilizes additional modules comprising a boundary detection module and a compression of the temporal features, which are not comprised in the embodiment of the method used to achieve the results shown in FIG.4.

FIG. 5 shows results of the present action segmentation method and known methods when such methods are trained and tested on the Assembly101 dataset. In order to obtain the results, a setting for temporal action segmentation similarly to other studies is followed, see [REF 3].

In FIG. 5, performances of the methods are evaluated using the metrics previously mentioned. Further, performances are also evaluated in terms of the number of parameters of the models comprised in the methods, such number being expressed in millions (M). Unlike the other metrics in FIG.5, performance of a method is considered better when the number of parameters is lower. The best result in each column of the table is represented in bold, and the second to best result is underlined.

In FIG. 5, the first column (TestAugm) contains an indication whether a Test Augmentation procedure similar to [REF 16] is used (a cross mark indicates that no test augmentation procedure is used and a check mark indicates that a test augmentation procedure is used).

FIG. 5 shows that the present method outperforms the known methods to which it is compared in terms of F1-score (for the three thresholds) and in terms of frame-wise accuracy, while comprising a lower number of parameters than the known methods. The other methods achieve slightly better performance in terms of segmental Edit distance; however they comprise more parameters, especially C2F-TCN-based methods, so that the present method can still be considered somewhat preferable due to a shorter training time.

The inventors have observed that the number of LTC modules in the architecture has an impact on the performance. In particular, the inventors have observed that when using the present method on the 50Salads dataset, a number of stage equal to 4 is particularly advantageous.

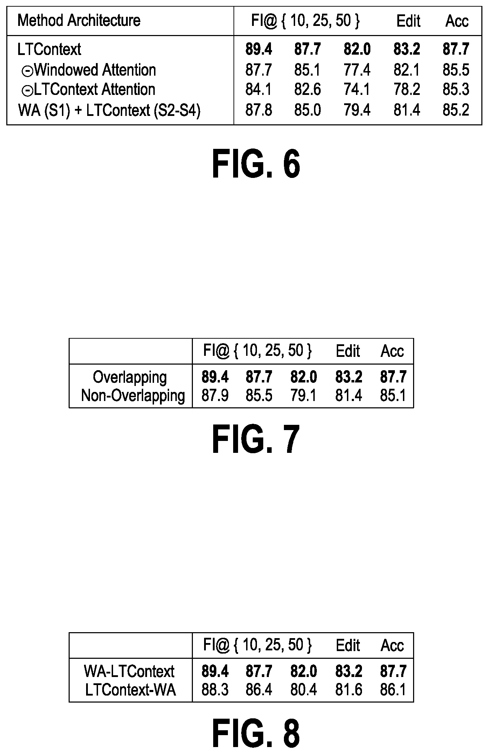

FIG. 6 shows an ablation study of the embodiments of the present method. In particular, performance of different architectures of the present method is evaluated when performing action segmentation on the 50Salads after training on such dataset.

A method according to the present disclosure with a complete architecture, which comprises LTC blocks composed of both a local attention module 110 (Windowed Attention) and a global attention module 120 (LTContext Attention) is compared to two variants. In a first variant (row 3), the global attention module 120 is used without the local attention module 110. In a second variant (row 4), the local attention module 110 is used without the global attention module 120. In order to enable fair comparison, the variants comprise two identical modules of the same attention type, i.e. two local attention modules or two global attention modules. The results show that combining local and global attention calculation provides a synergistic improvement in the performance of the method. Specifically, the embodiments of the present method used in the experiments rely on the architecture described in reference to FIG. 3 and 4.

Further, performance of the method with both global and local attention is compared when the type of attention is varied between LTC modules 140a, 140b, 140c, 140d but not within an LTC block 140. In particular, in row 5, the first LTC module (S1, 140a) comprises LTC blocks with only local attention modules 110 and the second, third and fourth LTC modules (140b, 140c, 140d) comprise LTC blocks with only global attention module 120. The results show that the combination of local attention module and global attention module within the same LTC block is particularly advantageous.

FIG. 7 shows results of embodiments of the present method when local segments are overlapping (row 2) and when the local segments are not overlapping (row 3). The results show that performance is enhanced when local segments are overlapping.

FIG. 8 shows results of embodiments of the present method when the local attention (windowed attention, "WA") is computed before the global attention (long-term context, "LTContext"), which is reported in row 2, and when the global attention is computed before local attention (row 3). The former case is the case described in detail in the present description and whose architecture is illustrated in FIG. 3. The latter case is not illustrated but is in the scope of the present disclosure. The results of FIG. 8 show that performance is enhanced when the local attention is computed before the global attention and that the output from the local attention is thereby used during the global attention computation.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense

**Claims**

1.  A computer-implemented method for action segmentation of a video sequence, the method comprising:

    - (S10) selecting a plurality of local segments (113) from the video sequence, each local segment comprising a plurality of successive frames of the video sequence;
    - (S12) processing local segments (113) with first attention transformers (114) in order to generate first enhanced feature maps (116) modelling relations between local segments (113), wherein the first attention transformers (114) are models configured to implement local scaled-dot product attention on the local segments (113), outputs of the first attention transformers (114) being concatenated in order to obtain the first enhanced feature maps (116);
    - (S20) selecting a plurality of global segments (123) from the first enhanced feature maps (116), each global segment comprising a plurality of non-successive frames of the first enhanced feature maps (116);
    - (S22) processing global segments (123) with second attention transformers (124) in order to generate second enhanced feature maps (126) modelling relations between global segments (123), wherein the second attention transformers (124) are models configured to implement local scaled-dot product on the global segments (123), outputs of the second attention transformers (124) being concatenated in order to obtain the second enhanced feature maps (126); and
    - (S30) assigning an action class to each frame of the video sequence based on the second enhanced feature maps (126), wherein the second enhanced feature maps (126) are processed through a linear layer and used for prediction of the action classes of frames of the video sequence.

2. The method of claim 1, wherein the step (S12) of processing local segments (113) comprises:

   - calculating local scaled dot-product self-attention weights for each local segment, wherein said weights are used to generate the first enhanced feature maps (116).

3. The method of claim 1 or 2, wherein the step (S22) of processing global segments (123) comprises:

   - calculating global scaled dot-product cross-attention weights for each global segment, wherein said weights are used to generate the second enhanced feature maps (126).

4. The method of any of claims 1 to 3, wherein:
   the plurality of local segments comprise all the frames of the video sequence, and the plurality of global segments comprise all the frames of the first enhanced feature maps.

5. The method of any of claims 1 to 4, wherein the step of (S20) selecting a plurality of global segments comprises:

   - selecting the global segments (123) by systematic sampling of the frames of the first enhanced feature maps (116) with a given sampling interval.

6. The method of any of claims 1 to 5, wherein:
   the selected plurality of successive local segments are overlapping segments, wherein two successive overlapping segments comprise at least one frame in common.

7. The method of any of claims 1 to 6, wherein the method further comprises using a residual connection to take into account, at least partially, the frames of the video sequence in the generation of the second enhanced feature maps.

8. The method of any of claims 1 to 7, wherein the method further comprises reducing a dimensionality of each frame of the video sequence before selecting the local segments from the video sequence.

9. The method of any of claims 1 to 8, wherein the steps of the method are sequentially applied to the video sequence a plurality of times.

10. The method of any of claim 9, wherein dimensionality of the frames of the video sequence is reduced between two sequential implementations of the method to the video sequence.

11. The method of any of claims 1 to 10, wherein the first transformers (114) and the second transformers (124) are trained using a multi-stage loss.

12. A computer program set including instructions for executing the steps of a method of any of claims 1 to 11, when said program set is executed by at least one computer.

13. A recording medium readable by a computer and having recorded thereon at least one computer program including instructions for executing the steps of the method of any of claims 1 to 11.


**Patentansprüche**

1. Computerimplementiertes Verfahren zur Aktionssegmentierung einer Videosequenz, das Verfahren umfassend:

   - (S10) Auswählen einer Vielzahl von lokalen Segmenten (113) aus der Videosequenz, jedes lokale Segment umfassend eine Vielzahl von aufeinanderfolgenden Einzelbildern der Videosequenz;
   - (S12) Verarbeiten lokaler Segmente (113) mit ersten Aufmerksamkeitstransformatoren (114), um erste erweiterte Merkmalskarten (116) zu erzeugen, die Beziehungen zwischen lokalen Segmenten (113) modellieren, wobei die ersten Aufmerksamkeitstransformatoren (114) Modelle sind, die konfiguriert sind, um lokale skalierte Punktproduktaufmerksamkeit auf den lokalen Segmenten (113) zu implementieren, wobei Ausgänge der ersten Aufmerksamkeitstransformatoren (114) verkettet werden, um die ersten verbesserten Merkmalskarten (116) zu erlangen;

- (S20) Auswählen einer Vielzahl von globalen Segmenten (123) aus den ersten erweiterten Merkmalskarten (116), jedes globale Segment umfassend eine Vielzahl von nicht aufeinanderfolgenden Einzelbildern der ersten erweiterten Merkmalskarten (116);

- (S22) Verarbeiten globaler Segmente (123) mit zweiten Aufmerksamkeitstransformatoren (124), um zweite erweiterte Merkmalskarten (126) zu erzeugen, die Beziehungen zwischen globalen Segmenten (123) modellieren, wobei die zweiten Aufmerksamkeitstransformatoren (124) Modelle sind, die konfiguriert sind, um ein lokales skaliertes Punktprodukt auf den globalen Segmenten (123) zu implementieren, wobei die Ausgänge der zweiten Aufmerksamkeitstransformatoren (124) verkettet werden, um die zweiten erweiterten Merkmalskarten (126) zu erlangen; und

- (S30) Zuweisen einer Aktionsklasse zu jedem Einzelbild der Videosequenz basierend auf den zweiten erweiterten Merkmalskarten (126), wobei die zweiten erweiterten Merkmalskarten (126) durch eine lineare Schicht verarbeitet und zum Vorhersagen der Aktionsklassen von Einzelbildern der Videosequenz verwendet werden.

2. Verfahren nach Anspruch 1, wobei der Schritt (S12) eines Verarbeitens lokaler Segmente (113) Folgendes umfasst:

- Berechnen von lokalen skalierten Punktprodukt-Selbstaufmerksamkeitsgewichten für jedes lokale Segment, wobei die Gewichte verwendet werden, um die ersten erweiterten Merkmalskarten (116) zu erzeugen.

3. Verfahren nach Anspruch 1 oder 2, wobei der Schritt (S22) eines Verarbeitens globaler Segmente (123) Folgendes umfasst:

- Berechnen von globalen skalierten Punktprodukt-Kreuzaufmerksamkeitsgewichten für jedes globale Segment, wobei die Gewichte verwendet werden, um die zweiten erweiterten Merkmalskarten (126) zu erzeugen.

4. Verfahren nach einem der Ansprüche 1 bis 3, wobei:
die Vielzahl von lokalen Segmenten alle Einzelbilder der Videosequenz umfasst und die Vielzahl von globalen Segmenten alle Einzelbilder der ersten erweiterten Merkmalskarten umfasst.

5. Verfahren nach einem der Ansprüche 1 bis 4, wobei der Schritt (S20) eines Auswählens einer Vielzahl von globalen Segmenten Folgendes umfasst:

- Auswählen der globalen Segmente (123) durch systematisches Abtasten der Einzelbilder der ersten erweiterten Merkmalskarten (116) mit einem gegebenen Abtastintervall.

6. Verfahren nach einem der Ansprüche 1 bis 5, wobei:
die ausgewählte Vielzahl aufeinanderfolgender lokaler Segmente überlappende Segmente sind, wobei zwei aufeinanderfolgende überlappende Segmente mindestens ein gemeinsames Einzelbild umfassen.

7. Verfahren nach einem der Ansprüche 1 bis 6, wobei das Verfahren ferner ein Verwenden einer Restverbindung umfasst, um die Einzelbilder der Videosequenz beim Erzeugen der zweiten erweiterten Merkmalskarten zumindest teilweise zu berücksichtigen.

8. Verfahren nach einem der Ansprüche 1 bis 7, wobei das Verfahren ferner ein Reduzieren einer Dimensionalität von jedem Einzelbild der Videosequenz vor Auswählen der lokalen Segmente aus der Videosequenz umfasst.

9. Verfahren nach einem der Ansprüche 1 bis 8, wobei die Schritte des Verfahrens nacheinander eine Vielzahl von Malen auf die Videosequenz angewendet werden.

10. Verfahren nach einem von Anspruch 9, wobei eine Dimensionalität der Bilder der Videosequenz zwischen zwei aufeinanderfolgenden Implementierungen des Verfahrens auf die Videosequenz reduziert wird.

11. Verfahren nach einem der Ansprüche 1 bis 10, wobei die ersten Transformatoren (114) und die zweiten Transformatoren (124) unter Verwendung eines mehrstufigen Verlustes trainiert werden.

12. Computerprogrammsatz, der Anweisungen zum Ausführen der Schritte eines Verfahrens nach einem der Ansprüche 1 bis 11 beinhaltet, wenn der Programmsatz von mindestens einem Computer ausgeführt wird.

13. Aufzeichnungsmedium, das von einem Computer lesbar ist und auf dem mindestens ein Computerprogramm aufgezeichnet ist, das Anweisungen zum Ausführen der Schritte des Verfahrens nach einem der Ansprüche 1 bis 11 beinhaltet.

**Revendications**

1. Procédé mis en œuvre par ordinateur pour la segmentation d'action d'une séquence vidéo, le procédé comprenant :

   - (S10) la sélection d'une pluralité de segments locaux (113) à partir de la séquence vidéo, chaque segment local comprenant une pluralité de vues successives de la séquence vidéo ;
   - (S12) le traitement de segments locaux (113) avec des premiers transformeurs d'attention (114) afin de générer des premières cartes de caractéristiques augmentées (116) qui modélisent des relations entre des segments locaux (113), les premiers transformeurs d'attention (114) étant des modèles configurés pour mettre en œuvre une attention de produit scalaire local pondéré sur les segments locaux (113), des sorties des premiers transformeurs d'attention (114) étant concaténées afin d'obtenir les premières cartes de caractéristiques augmentées (116) ;
   - (S20) la sélection d'une pluralité de segments globaux (123) à partir des premières cartes de caractéristiques augmentées (116), chaque segment global comprenant une pluralité de vues non-successives des premières cartes de caractéristiques augmentées (116) ;
   - (S22) le traitement des segments globaux (123) avec des deuxièmes transformeurs d'attention (124) afin de générer des deuxièmes cartes de caractéristiques augmentées (126) qui modélisent des relations entre les segments globaux (123), les deuxièmes transformeurs d'attention (124) étant des modèles configurés pour mettre en application un produit scalaire local pondéré sur les segments globaux (123), des sorties des deuxièmes transformeurs d'attention (124) étant concaténées afin d'obtenir les deuxièmes cartes de caractéristiques augmentées (126) ; et
   - (S30) l'assignation d'une classe d'action à chaque vue de la séquence vidéo sur la base des deuxièmes cartes de caractéristiques augmentées (126), les deuxièmes cartes de caractéristiques augmentées (126) étant traitées par l'intermédiaire d'une couche linéaire et utilisées pour la prédiction des classes d'action de vues de la séquence vidéo.

2. Procédé selon la revendication 1, selon lequel l'étape (S12) de traitement des segments locaux (113) comprend :

   - le calcul de poids d'auto-attention de produit scalaire local pondéré pour chaque segment local, lesdits poids étant utilisés pour générer les premières cartes de caractéristiques augmentées (116).

3. Procédé selon la revendication 1 ou 2, selon lequel l'étape (S22) de traitement des segments globaux (123) comprend :

   - le calcul de poids d'attention croisée de produit scalaire global pondéré pour chaque segment global, lesdits poids étant utilisés pour générer les deuxièmes cartes de caractéristiques augmentées (126).

4. Procédé selon l'une quelconque des revendications 1 à 3, selon lequel :
   la pluralité de segments locaux comprend toutes les vues de la séquence vidéo, et la pluralité de segments globaux comprend toutes les vues des premières cartes de caractéristiques augmentées.

5. Procédé selon l'une quelconque des revendications 1 à 4, selon lequel l'étape (S20) de sélection d'une pluralité de segments globaux comprend :

   - la sélection de segments globaux (123) par échantillonnage systématique des vues des premières cartes de caractéristiques augmentées (116) avec un intervalle d'échantillonnage donné.

6. Procédé selon l'une quelconque des revendications 1 à 5, selon lequel :
   la pluralité sélectionnée de segments locaux successifs est constituée de segments qui se chevauchent, deux segments qui se chevauchent successifs comprenant au moins une vue en commun.

7. Procédé selon l'une quelconque des revendications 1 à 6, selon lequel le procédé comprend en outre l'utilisation d'une connexion résiduelle pour prendre en compte, au moins partiellement, les vues de la séquence vidéo dans la

**EP 4 481 696 B1**

génération des deuxièmes cartes de caractéristiques augmentées.

8. Procédé selon l'une quelconque des revendications 1 à 7, selon lequel le procédé comprend en outre la réduction d'une dimensionnalité de chaque vue de la séquence vidéo avant de sélectionner les segments locaux à partir de la séquence vidéo.

9. Procédé selon l'une quelconque des revendications 1 à 8, selon lequel les étapes du procédé sont appliquées de manière séquentielle sur la séquence vidéo une pluralité de fois.

10. Procédé selon la revendication 9, selon lequel la dimensionnalité des cadres de la séquence vidéo est réduite entre deux mises en œuvre séquentielles du procédé sur la séquence vidéo.

11. Procédé selon l'une quelconque des revendications 1 à 10, selon lequel les premiers transformeurs (114) et les deuxièmes transformeurs (124) sont entraînés en utilisant une perte à plusieurs étages.

12. Ensemble de programme informatique comprenant des instructions pour exécuter les étapes d'un procédé selon l'une quelconque des revendications 1 à 11, quand ledit ensemble de programme est exécuté par au moins un ordinateur.

13. Support d'enregistrement lisible par un ordinateur et ayant enregistré dessus au moins un programme informatique comprenant des instructions pour exécuter les étapes du procédé selon l'une quelconque des revendications 1 à 11.

S10 — Selecting a plurality of local segments of successive frames from the video sequence

S12 — Processing each local segment with an attention transformer in order to generate first enhanced feature maps

S20 — Selecting a plurality of global segments of non-successive frames from the first enhanced feature maps

S22 — Processing each global segment with an attention transformer in order to generate second enhanced feature maps

S30 — Assigning an action class to each frame of the video sequence based on the second enhanced feature maps

# FIG. 1

**FIG. 2**

**FIG. 3**

| Method | Note | Breakfast | | | | | 50Salads | | | | |
|---|---|---|---|---|---|---|---|---|---|---|---|
| | | FI@ { 10, 25, 50 } | | | Edit | Acc | FI@ { 10, 25, 50 } | | | Edit | Acc |
| IDT+LM | DF₄ | - | - | - | - | - | 44.4 | 38.9 | 27.8 | 45.8 | 48.7 |
| ST-CNN | DF₂ | - | - | - | - | - | 55.9 | 49.6 | 37.1 | 45.9 | 59.4 |
| ED-TCN | DF₂ | - | - | - | - | - | 68.0 | 63.9 | 52.6 | 59.8 | 64.7 |
| TDRN | DF₂ | - | - | - | - | - | 72.9 | 68.5 | 57.2 | 66.0 | 68.1 |
| SSA-GAN | DF₃ | - | - | - | - | 43.3 | 74.9 | 71.7 | 67.0 | 69.8 | 73.3 |
| Bridge-Prompt | DF₄ | - | - | - | - | - | 89.2 | **87.8** | 81.3 | **83.8** | **88.1** |
| C2F-TCN | TA | 72.2 | 68.7 | 57.6 | 69.6 | **76.0** | 84.3 | 81.8 | 72.6 | 76.4 | 84.9 |
| UVAST+Viterbi | P | 75.9 | 70.0 | 57.2 | 76.5 | 66.0 | 89.1 | 87.6 | 81.7 | **83.9** | 87.4 |
| UVAST+FIFA | P | 76.9 | 71.5 | 58.0 | 77.1 | 69.7 | 88.9 | 87.0 | 78.5 | 83.9 | 84.5 |
| Liu+ASRF | P | 77.5 | 72.3 | 59.5 | 76.7 | 73.7 | 87.9 | 86.6 | 80.5 | 82.7 | 86.6 |
| DTL | C | **78.8** | **74.5** | **62.9** | **77.7** | 75.8 | 87.1 | 85.7 | 78.5 | 80.5 | 86.9 |
| MS-TCN | - | 52.6 | 48.1 | 37.9 | 61.7 | 66.3 | 76.3 | 74.0 | 64.5 | 67.9 | 80.7 |
| MS-TCN++ | - | 64.1 | 58.6 | 45.9 | 65.6 | 67.6 | 80.7 | 78.5 | 70.1 | 74.3 | 83.7 |
| DTGRM | - | 68.7 | 61.9 | 46.6 | 68.9 | 68.3 | 79.1 | 75.9 | 66.1 | 72.0 | 80.0 |
| MuCon | - | 73.2 | 66.1 | 48.4 | 76.3 | 62.8 | - | - | - | - | - |
| Gao et al. | - | 74.9 | 69.0 | 55.2 | 73.3 | 70.7 | 80.3 | 78.0 | 69.8 | 73.4 | 82.2 |
| BCN | - | 68.7 | 65.5 | 55.0 | 66.2 | 70.4 | 82.3 | 81.3 | 74.0 | 74.3 | 84.4 |
| SSTDA | - | 75.0 | 69.1 | 55.2 | 73.7 | 70.2 | 83.0 | 81.5 | 73.8 | 75.8 | 82.2 |
| C2F-TCN | - | 70.1 | 66.6 | 56.2 | 68.2 | 73.5 | 76.6 | 73.0 | 62.5 | 69.2 | 80.1 |
| ASRF | - | 74.3 | 68.9 | 56.1 | 72.4 | 67.6 | 84.9 | 83.5 | 77.3 | 79.3 | 84.5 |
| UVAST | - | <u>76.7</u> | 70.0 | 56.6 | **77.2** | 68.2 | 86.2 | 81.2 | 70.4 | **83.9** | 79.5 |
| DPRN | - | 75.6 | 70.5 | 57.6 | 75.1 | 71.7 | <u>87.8</u> | <u>86.3</u> | 79.4 | 82.0 | <u>87.2</u> |
| LGTNN | - | 76.2 | <u>71.5</u> | 57.5 | 75.2 | 72.5 | 87.5 | 86.2 | 79.8 | 82.0 | 86.1 |
| ASFormer | - | 76.0 | 70.6 | 57.4 | 75.0 | 73.5 | 85.1 | 83.4 | 76.0 | 79.6 | 85.6 |
| TCTr | - | 76.6 | 71.1 | <u>58.5</u> | 76.1 | **77.5** | 87.5 | 86.1 | <u>80.2</u> | <u>83.4</u> | 86.6 |
| Present Method | - | **77.6** | **72.6** | **60.1** | <u>77.0</u> | <u>74.2</u> | **89.4** | **87.7** | **82.0** | 83.2 | **87.7** |

## FIG. 4

| Method | TestAug | Assembly101 | | | | | |
|---|---|---|---|---|---|---|---|
| | | FI@ { 10, 25, 50 } | | | Edit | Acc | Params (M) |
| UVAST | ✗ | 30.8 | 27.5 | 20.4 | <u>30.8</u> | 36.8 | 1.22 |
| MS-TCN++ | ✗ | 31.6 | 27.8 | 20.6 | <u>30.7</u> | 37.1 | 1.08 |
| ASFormer | ✗ | 31.8 | 28.4 | 20.8 | 29.2 | 37.6 | 1.13 |
| C2F-TCN | ✗ | <u>33.3</u> | 28.6 | 20.6 | 31.7 | 37.8 | 6.89 |
| C2F-TCN | ✓ | <u>33.3</u> | <u>29.0</u> | <u>21.3</u> | **32.4** | <u>39.2</u> | 6.89 |
| Present Method | ✗ | **33.5** | **29.6** | **21.8** | 29.8 | **39.3** | 0.72 |

## FIG. 5

| Method Architecture | FI@ { 10, 25, 50 } | | | Edit | Acc |
|---|---|---|---|---|---|
| LTContext | **89.4** | **87.7** | **82.0** | **83.2** | **87.7** |
| ⊖Windowed Attention | 87.7 | 85.1 | 77.4 | 82.1 | 85.5 |
| ⊖LTContext Attention | 84.1 | 82.6 | 74.1 | 78.2 | 85.3 |
| WA (S1) + LTContext (S2-S4) | 87.8 | 85.0 | 79.4 | 81.4 | 85.2 |

# FIG. 6

| | FI@ { 10, 25, 50 } | | | Edit | Acc |
|---|---|---|---|---|---|
| Overlapping | **89.4** | **87.7** | **82.0** | **83.2** | **87.7** |
| Non-Overlapping | 87.9 | 85.5 | 79.1 | 81.4 | 85.1 |

# FIG. 7

| | FI@ { 10, 25, 50 } | | | Edit | Acc |
|---|---|---|---|---|---|
| WA-LTContext | **89.4** | **87.7** | **82.0** | **83.2** | **87.7** |
| LTContext-WA | 88.3 | 86.4 | 80.4 | 81.6 | 86.1 |

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KARAMAN, SVEBOR** ; **SEIDENARI, LORENZO** ; **DEL BIMBO, ALBERTO**. Fast saliency based pooling of fisher encoded dense trajectories.. *ECCV THUMOS Workshop.*, 2014, 5
- **LEA, COLIN** ; **FLYNN, MICHAEL D** ; **VIDAL, RENE et al.** Temporal convolutional networks for action segmentation and detection. *Proceedings of the IEEE Conference on Computer Vision and Pattern Recognition.*, 2017, 156-165
- **FARHA, YAZAN ABU** ; **GALL, JURGEN.** Ms-tcn: Multi-stage temporal convolutional network for action segmentation. *Proceedings of the IEEE/CVF conference on computer vision and pattern recognition.*, 2019, 3575-3584
- **VASWANI, ASHISH** ; **SHAZEER, NOAM** ; **PARMAR, NIKI et al.** Attention is all you need.. *Advances in neural information processing systems*, 2017, vol. 30
- **YI, FANGQIU** ; **WEN, HONGYU** ; **JIANG, TINGTING.** ASformer: Transformer for action segmentation.. *arXiv preprint arXiv:2110.08568*, 2021
- **STEIN, SEBASTIAN** ; **MCKENNA, STEPHEN J.** Combining embedded accelerometers with computer vision for recognizing food preparation activities.. *Proceedings of the 2013 ACM international joint conference on Pervasive and ubiquitous computing.*, 2013, 729-738
- **KUEHNE, HILDE** ; **ARSLAN, ALI** ; **SERRE, THOMAS**. The language of actions: Recovering the syntax and semantics of goal-directed human activities.. *Proceedings of the IEEE conference on computer vision and pattern recognition.*, 2014, 780-787
- **SENER, FADIME** ; **CHATTERJEE, DIBYADIP** ; **SHELEPOV, DANIEL et al.** Assembly101: A large-scale multi-view video dataset for understanding procedural activities.. *Proceedings of the IEEE/CVF Conference on Computer Vision and Pattern Recognition.*, 2022, 21096-21106
- **RICHARD, ALEXANDER** ; **GALL, JUERGEN.** Temporal action detection using a statistical language model.. *Proceedings of the IEEE conference on computer vision and pattern recognition.*, 2016, 3131-3140
- Segmental spatiotemporal cnns for fine-grained action segmentation.. **LEA, COLIN** ; **REITER, AUSTIN** ; **VIDAL, RENÉ et al.** Computer Vision-ECCV 2016: 14th European Conference. Springer International Publishing, 11 October 2016, 36-52
- **LEA, COLIN** ; **FLYNN, MICHAEL D.** ; **VIDAL, RENE et al.** Temporal convolutional networks for action segmentation and detection.. *proceedings of the IEEE Conference on Computer Vision and Pattern Recognition.*, 2017, 156-165
- **LEI, PENG** ; **TODOROVIC, SINISA**. Temporal deformable residual networks for action segmentation in videos.. *Proceedings of the IEEE conference on computer vision and pattern recognition.*, 2018, 6742-6751
- **GAMMULLE, HARSHALA** ; **DENMAN, SIMON** ; **SRIDHARAN, SRIDHA et al.** Fine-grained action segmentation using the semi-supervised action GAN.. *Pattern Recognition*, 2020, vol. 98, 107039
- **LI, MUHENG** ; **CHEN, LEI** ; **DUAN, YUEQI et al.** Bridge-prompt: Towards ordinal action understanding in instructional videos.. *Proceedings of the IEEE/CVF Conference on Computer Vision and Pattern Recognition.*, 2022, 19880-19889
- **SINGHANIA, DIPIKA** ; **RAHAMAN, RAHUL** ; **YAO, ANGELA**. Coarse to fine multi-resolution temporal convolutional network.. *arXiv preprint arXiv:2105.10859*, 2021
- Unified fully and timestamp supervised temporal action segmentation via sequence to sequence translation.. **BEHRMANN, NADINE** ; **GOLESTANEH, S. ALIREZA** ; **KOLTER, ZICO et al.** Computer Vision-ECCV 2022: 17th European Conference. Springer Nature, 23 October 2022, 52-68
- **FORNEY, G. DAVID.** The viterbi algorithm.. *Proceedings of the IEEE*, 1973, vol. 61 (3), 268-278
- Fifa: Fast inference approximation for action segmentation.. **SOURI, YASER** ; **FARHA, YAZAN ABU** ; **DESPINOY, FABIEN et al.** Pattern Recognition: 43rd DAGM German Conference, DAGM GCPR 2021. Springer International Publishing, 2022, 282-296
- **LIU, ZHICHAO** ; **WANG, LESHAN** ; **ZHOU, DESEN et al.** Temporal Segment Transformer for Action Segmentation.. *arXiv preprint arXiv:2302.13074*, 2023

- Alleviating Over-segmentation Errors by Detecting Action Boundaries.. **ISHIKAWA, YUCHI** ; **KASAI, SEITO** ; **AOKI, YOSHIMITSU et al.** 2021 IEEE Winter Conference on Applications of Computer Vision (WACV).. IEEE, 2021, 2321-2330

- **XU, ZIWEI** ; **RAWAT, YOGESH** ; **WONG, YONG-KANG et al.** Don't Pour Cereal into Coffee: Differentiable Temporal Logic for Temporal Action Segmentation.. *Advances in Neural Information Processing Syaithorsstems*, 2022, vol. 35, 14890-14903

- **LI, SHI-JIE** ; **ABUFARHA, YAZAN** ; **LIU, YUN et al.** MS-TCN++: Multi-Stage Temporal Convolutional Network for Action Segmentation.. *IEEE Transactions on Pattern Analysis and Machine Intelligence*, 2020

- **WANG, DONG** ; **HU, DI** ; **LI, XINGJIAN et al.** Temporal relational modeling with self-supervision for action segmentation.. *Proceedings of the AAAI Conference on Artificial Intelligence.*, 2021, 2729-2737

- **SOURI, YASER** ; **FAYYAZ, MOHSEN** ; **MINCIULLO, LUCA et al.** Fast weakly supervised action segmentation using mutual consistency.. *IEEE Transactions on Pattern Analysis and Machine Intelligence*, 2021, vol. 44 (10), 6196-6208

- **GAO, SHANG-HUA** ; **HAN, QI** ; **LI, ZHONG-YU et al.** Global2local: Efficient structure search for video action segmentation.. *Proceedings of the IEEE/CVF Conference on Computer Vision and Pattern Recognition.*, 2021, 16805-16814

- Boundary-aware cascade networks for temporal action segmentation.. **WANG, ZHENZHI** ; **GAO, ZITENG** ; **WANG, LIMIN et al.** Computer Vision-ECCV 2020: 16th European Conference. Springer International Publishing, 23 August 2020, 34-51

- Action Segmentation With Joint Self-Supervised Temporal Domain Adaptation.. **CHEN, MIN-HUNG** ; **LI, BAOPU** ; **BAO, YINGZE et al.** 2020 IEEE/CVF Conference on Computer Vision and Pattern Recognition (CVPR).. IEEE, 2020, 9451-9460

- **PARK, JUNYONG** ; **KIM, DAEKYUM** ; **HUH, SEJOON et al.** Maximization and restoration: Action segmentation through dilation passing and temporal reconstruction.. *Pattern Recognition*, 2022, vol. 129, 108764

- **TIAN, XIAOYAN** ; **JIN, YE** ; **TANG, XIANGLONG.** Local-Global Transformer Neural Network for temporal action segmentation.. *Multimedia Systems*, 2023, vol. 29 (2), 615-626

- **AZIERE, NICOLAS** ; **TODOROVIC, SINISA.** Multi-stage temporal convolution transformer for action segmentation.. *Image and Vision Computing*, 2022, vol. 128, 104567

- **CARREIRA, JOAO** ; **ZISSERMAN, ANDREW.** Quo vadis, action recognition? a new model and the kinetics dataset.. *proceedings of the IEEE Conference on Computer Vision and Pattern Recognition.*, 2017, 6299-6308

- **LIN, JI** ; **GAN, CHUANG** ; **HAN, SONG.** Tsm: Temporal shift module for efficient video understanding.. *Proceedings of the IEEE/CVF international conference on computer vision.*, 2019, 7083-7093

- **ULYANOV, DMITRY** ; **VEDALDI, ANDREA** ; **LEMPITSKY, VICTOR.** Instance normalization: The missing ingredient for fast stylization.. *arXiv preprint arXiv:1607.08022*, 2016

- **DU, DAZHAO** ; **SU, BING** ; **LI, YU et al.** Efficient u-transformer with boundary-aware loss for action segmentation.. *arXiv preprint arXiv:2205.13425*, 2022